Europäisches Patentamt

European Patent Office

Office européen des brevets

(19)

(11) **EP 0 522 926 B1**

(12) **FASCICULE DE BREVET EUROPEEN**

(45) Date de publication et mention
de la délivrance du brevet:
**12.08.1998 Bulletin 1998/33**

(51) Int Cl.⁶: **G11B 7/00**, G11B 7/14,
G11B 7/12, G11B 7/007

(21) Numéro de dépôt: **92401858.3**

(22) Date de dépôt: **30.06.1992**

(54) **Système de lecture de disque optique**

Lesesystem für optische Platte

Optical disc player system

(84) Etats contractants désignés:
**DE GB IT NL**

(30) Priorité: **09.07.1991 FR 9108606**

(43) Date de publication de la demande:
**13.01.1993 Bulletin 1993/02**

(73) Titulaire: **THOMSON-CSF**
**75008 Paris (FR)**

(72) Inventeur: **Lehureau, Jean-Claude**
**F-92045 Paris la Défense (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
EP-A- 0 190 698     EP-A- 0 418 879
DE-A- 4 036 615     US-A- 3 911 230
US-A- 3 992 593

# Description

L'invention concerne la lecture d'informations enregistrées sous forme optique. Le document de brevet EP-A-0 190 698 illustre l'état de la technique dans ce domaine.

Les disques optiques, c'est-à-dire les disques qui contiennent des informations pouvant être lues par des systèmes optiques, sont maintenant bien connus.

Le principe de fonctionnement est le suivant : les informations sont le plus souvent constituées par des trous gravés disposés le long de pistes circulaires séparées par des espaces interpistes dépourvus de trous. Un laser focalisé sur une petite surface éclaire les pistes (et partiellement aussi l'espace interpiste). Le disque tourne sous le laser de sorte qu'une seule piste à la fois défile sous le faisceau focalisé. Le faisceau est réfléchi vers un photodétecteur et le coefficient de réflexion dépend de la présence ou l'absence d'un trou dans la piste. Le défilement des trous sous le faisceau produit donc une modulation de l'amplitude du faisceau réfléchi. Le photodétecteur produit un signal modulé en conséquence, représentant le défilement des trous. C'est ce signal qui permet de reconstituer l'information utile, c'est-à-dire la position des trous le long de chacune des pistes, ou la géométrie de ces trous.

Dans cette technique, la surface plane du disque entre les pistes sert de plan de référence pour la détection de l'information utile.

On peut stocker des densités d'information élevées à condition de pouvoir très bien focaliser le faisceau laser sur des trous très petits le long de pistes très étroites.

Cela suppose notamment des objectifs de focalisation de très grande précision, dépourvus d'aberrations, et positionnés très précisément latéralement par rapport aux pistes et verticalement par rapport aux surfaces de référence du disque. Cela suppose aussi qu'on travaille avec des lasers de lecture ayant une longueur d'onde la plus courte possible, ce qui n'est pas toujours compatible avec des faibles coûts de réalisation.

Un but de l'invention est de proposer un système de lecture qui diminue les contraintes liées aux techniques actuelles de lecture, de sorte qu'on puisse améliorer le compromis entre les coûts de fabrication (coût des systèmes optiques de focalisation du laser, des systèmes mécaniques d'asservissement de position, et du laser lui-même) et les performances (densité de stockage d'informations, qualité des informations restituées).

L'idée maîtresse de l'invention est d'effectuer non pas une simple détection de l'amplitude (énergie lumineuse) du faisceau laser modulé par les informations optiques stockées, mais une détection combinée d'amplitude et de phase de l'onde optique cohérente du faisceau laser modulé.

En effet, lorsqu'un front d'onde d'une onde électromagnétique cohérente (un laser émet une telle onde cohérente) rencontre un obstacle, constitué en l'occurrence par une information optique (trou gravé dans une surface plane ou autre perturbation sur le trajet de l'onde), le front d'onde est déformé et transporte alors une information complexe (au sens mathématique du terme : amplitude et phase) liée directement à la constitution de l'obstacle.

La modulation d'énergie du faisceau modulé (par exemple le faisceau réfléchi par la surface d'un disque optique) n'est qu'une composante de cette information complexe. C'est la plus facile à détecter. L'information complexe, qui est l'amplitude et la phase de l'onde en chaque point de l'espace, ou encore qui est la forme exacte du front d'onde modulé par l'obstacle, est plus riche que la simple information d'énergie globale du faisceau réfléchi. Mais bien sûr elle n'est pas facile à détecter. En effet, les photodétecteurs ne mesurent qu'une énergie reçue.

L'invention propose un système de lecture d'informations optiques qui comporte des moyens pour faire interférer un faisceau laser de référence avec ce même faisceau modulé par des informations optiques à lire, pour créer un motif de franges d'interférences spatiales sur un ensemble de photodétecteurs répartis dans une zone spatiale où ces franges sont présentes, et des moyens pour traiter les informations d'amplitude et de phase spatiale des franges d'interférences pour reconstituer les informations optiques qui ont engendré le motif de franges.

Lorsqu'un faisceau de lumière cohérente est modulé par un obstacle représentant une information optique, il peut être combiné avec le même faisceau non modulé, ce qui crée un hologramme, c'est-à-dire un motif particulier de franges d'interférences. Ce motif a la propriété de contenir sous forme cachée toute l'information relative à l'obstacle qui a modulé le faisceau.

L'idée de l'invention est d'utiliser cette propriété pour lire les informations d'un disque optique, en projetant cet hologramme sur un ensemble de photodétecteurs et en traitant ensuite les signaux issus des photodétecteurs pour retrouver l'information optique initiale. Cette information est retrouvée sous une forme plus complète que dans les systèmes de lecture classique car elle inclut des informations de phase de l'onde électromagnétiqe modulée. En effet, l'établissement d'un hologramme par composition d'un faisceau de référence et du faisceau modulé ne fait pas disparaître ces informations de phase. Au contraire, dans les systèmes de lecture classique, l'information de phase disparaît complètement.

Parmi les avantages très importants de ce nouveau mode de lecture, on peut citer les suivants :

-          possibilité d'utiliser des systèmes optiques moins précis du fait que le faisceau laser peut éclairer plusieurs pistes à la fois, la distinction entre les informations correspondant aux différentes pistes se faisant par traitement de signal électronique;

- possibilité de corriger, par traitement de signal électronique, des défauts des systèmes optiques, et notamment des défauts d'aberration et des défauts de focalisation;

- par voie de conséquence, possibilité d'utiliser des systèmes d'asservissement mécanique moins précis, aussi bien verticalement au dessus de la surface du disque optique que radialement pour rester sur une piste;

- possibilité de supprimer les espaces interpistes dans les disques de stockage, car il n'est plus nécessaire d'avoir une surface de référence pour la lecture de chaque information optique; une référence approximative globale peut suffire; en supprimant les espaces interpistes on peut alors presque doubler la densité d'informations optiques stockées dans une surface donnée;

- possibilité d'améliorer encore la densité de stockage en établissant de manière distinguable des informations d'amplitude et des informations de phase du faisceau réfléchi, ou en effectuant une discrimination de phase avec des structures de trous gravés qui s'y prêtent (c'est-à-dire des structures qui introduisent des déphasages quantifiables).

Il est intéressant par ailleurs de remarquer que dans les systèmes de lecture classique il existe pratiquement déjà un faisceau de référence qui peut servir selon l'invention à la constitution des franges d'interférences; en effet, dans les systèmes classiques, du fait qu'on est obligé de séparer le faisceau laser incident et le faisceau réfléchi modulé, on utilise une lame de séparation semitransparente. La moitié de l'énergie lumineuse du faisceau laser incident est perdue dans cette opération. L'invention va utiliser cette moitié perdue pour établir un faisceau de référence avec lequel on composera le faisceau modulé pour constituer les franges.

En pratique, pour des raisons essentiellement mécaniques, on continuera à préférer un stockage sur disque tournant, avec une tête de lecture fixe au dessus de la surface du disque contenant les informations.

Dans ce cas, on pourra utiliser un ensemble de photodétecteurs sous forme d'une barrette linéaire. Cette barrette sera placée de telle manière qu'elle reçoive et puisse détecter les franges d'interférences qui résultent de la modulation du faisceau laser par un ensemble d'informations disposées radialement sur le disque.

En d'autres mots, si le faisceau laser est focalisé de manière à éclairer un segment radial du disque (incluant éventuellement plusieurs pistes juxtaposées), la barrette sera placée dans une zone image de ce segment par rapport au système optique de focalisation du faisceau laser; et le faisceau de référence sera orienté par rapport au faisceau de retour modulé de telle manière que sa composition avec le faisceau modulé produise des franges d'interférences réparties le long de cette barrette.

Le faisceau laser de référence et le faisceau modulé sont tous les deux renvoyés vers les photodétecteurs, l'incidence du faisceau de référence étant suffisamment oblique par rapport à celle du faisceau modulé pour générer des franges d'interférences, mais pas trop oblique quand même, compte tenu du pas de répartition des photodétecteurs dans la barrette, pour que le pas des franges ne diminue pas trop et qu'on puisse à l'aide de la barrette de photodétecteurs effectuer des mesures de phase spatiale et d'amplitude de ces franges.

Le traitement de signal utilisé pour reconstituer les informations optiques stockées, à partir des signaux issus des photodétecteurs sera globalement le suivant : transformée de Fourier bidimensionnelle des signaux, traitement de signaux sur la transformée de Fourier pour éliminer la composante de fréquence spatiale correspondant au faisceau de référence non modulé et ne garder que celle du faisceau modulé (ce traitement est une simple translation dans le domaine des fréquences spatiales), traitement de signal éventuel sur la transformée de Fourier, pour corriger par exemple des aberrations des lentilles de focalisation ou des défauts de focalisation; et transformée de Fourier inverse pour repasser d'une fonction dans le domaine fréquentiel à une fonction dans le domaine réel, cette fonction représentant les informations optiques inscrites dans le disque.

Dans le cas (en fait peu probable) où le disque ne tournerait pas, les photodétecteurs seraient disposés en matrice bidimensionnelle et la transformée de Fourier serait une transformée dans un domaine bidimensionnel de fréquences spatiales.

Mais dans le cas plus intéressant d'un disque tournant, les photodétecteurs seront agencés en barrette linéaire et la transformée de Fourier sera une transformée spatiale et temporelle des signaux variables dans le temps qui sont issus des détecteurs au fur et à mesure du défilement du disque. La transformée inverse fera revenir d'une fonction dans le domaine bidimensionnel de fréquence spatiale et fréquence temporelle à une fonction dans le domaine réel de l'espace (une dimension : radiale) et du temps, représentant sous forme de signaux électriques les informations inscrites le long d'un segment radial du disque et leur défilement dans le temps.

Les fonctions de traitement de correction seront assez simples; le plus souvent, une fonction de phase telle que :

$$e^{jk(u^2+v^2)} \text{ ou } e^{jk(u^2+v^2)^2}$$

conviendra, avec k coefficient numérique fonction de l'importance de la correction à effectuer, j est le nombre imaginaire racine carrée de -1, et u et v variables (fréquence spatiale et fréquence temporelle, ou exceptionnellement deux fréquences spatiales) de la transformée de Fourier à corriger.

De telles fonctions appliquées à une transformée de Fourier permettent de corriger très facilement des aberrations sphériques d'objectifs ou d'autres défauts tels que des aberrations de désalignement. Les défauts de focalisation peuvent également être corrigés.

Enfin, on propose un système de lecture selon l'invention qui comprend un disque comportant des pistes adjacentes circulaires avec un espace interpiste de largeur nulle ou très inférieure à la largeur d'une piste.

D'autres caractéristiques et avantages de l'invention apparaîtront à la lecture de la description détaillée qui suit et qui est faite en référence aux dessins annexés dans lesquels :

- la figure 1 représente un schéma bloc de lecteur de disque optique classique.
- la figure 2 représente un schéma-bloc de lecteur selon l'invention.
- la figure 3 représente la surface d'un disque de stockage avec des pistes juxtaposées sans espace interpiste.

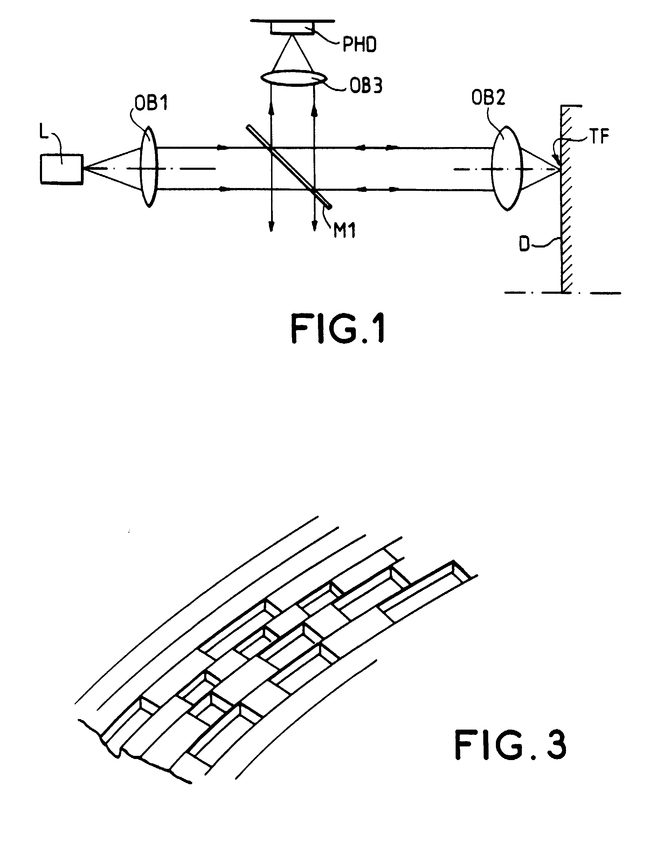

A la figure 1, on a rappelé sous forme schématique la constitution d'un lecteur de disque optique classique : un laser L émet un faisceau qui est collimaté par un système optique OB1, et dirigé sous forme de faisceau parallèle vers un miroir semi-transparent M1 incliné à 45°, qui sert essentiellement à séparer le faisceau réfléchi du faisceau incident pour ne renvoyer vers un photodétecteur que le faisceau réfléchi.

Le faisceau incident passe en partie à travers le miroir M1, mais une autre partie est déviée à 90° (vers le bas sur la figure 1). La partie déviée est perdue. La partie non déviée est dirigée vers le disque D qui contient les informations à lire, stockées sous forme optique. Elle est focalisée par un système optique OB2 à grande ouverture sur une très petite surface du disque D (tache de focalisation TF de quelques micromètres de diamètre).

Le disque est situé dans un plan transversal par rapport au faisceau incident, et il tourne autour d'un axe perpendiculaire à ce plan et décalé latéralement par rapport à l'axe optique du système OB2. La rotation du disque permet donc à la tache de focalisation de balayer une piste circulaire à la surface du disque. Des moyens mécaniques non représentés permettent de décaler plus ou moins l'axe de rotation du disque par rapport à l'axe du faisceau incident, de sorte que le disque peut comporter plusieurs pistes circulaires concentriques et qu'on peut choisir la piste qu'on veut lire.

Le faisceau laser focalisé sur la surface du disque est réfléchi avec un coefficient de réflexion qui est fonction de l'information stockée dans le disque. Puisque le disque tourne, on a une modulation temporelle du coefficient de réflexion en fonction du défilement des informations sur la piste explorée.

Le faisceau réfléchi ainsi modulé retraverse le système optique OB2; il atteint le miroir semi-transparent à 45° M1 et est renvoyé à 90°, cette fois vers le haut de la figure, vers un système optique de focalisation OB3, et, derrière ce système, vers une diode photosensible PHD. La diode PHD fournit un signal électrique dont la modulation représente la modulation d'énergie du faisceau réfléchi au cours du défilement du disque sous le faisceau laser.

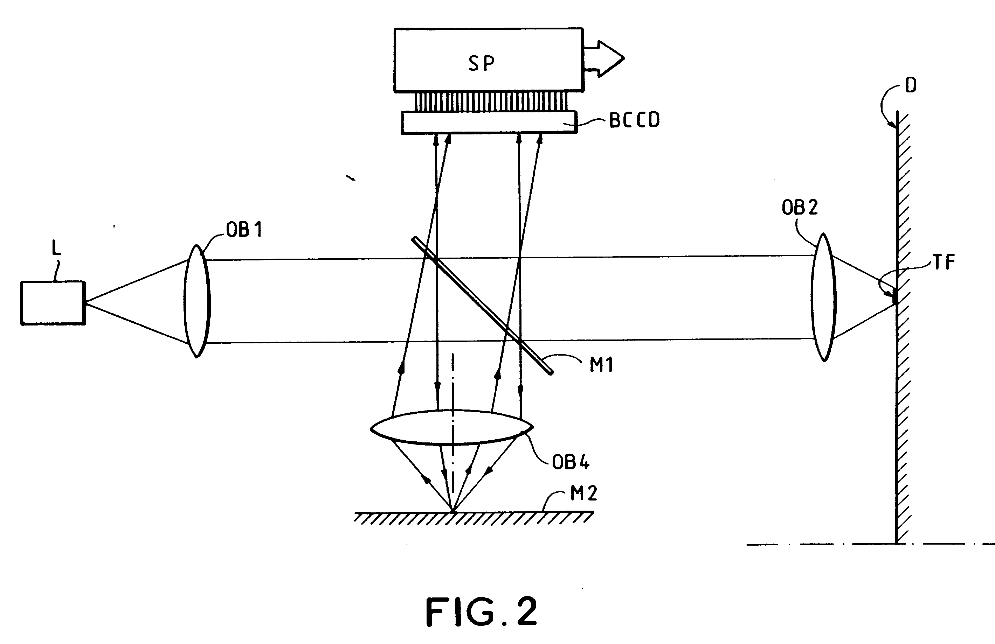

La structure de base du lecteur de disque optique selon l'invention est représentée à la figure 2, avec les mêmes références numériques qu'à la figure 1 pour les éléments correspondants. Elle possède deux éléments caractéristiques : d'une part la portion de faisceau incident qui était perdue par le miroir M1 est réutilisée et composée avec le faisceau réfléchi modulé par les informations optiques à lire; d'autre part la conversion d'énergie lumineuse en énergie électrique se fait non pas par une seule photodiode mais par un ensemble de photodiodes désigné globalement par la référence BCCD.

Plus précisément, la partie de faisceau incident qui n'est pas dirigée vers l'objectif OB2 puis vers le disque, et qui est déviée à 90° par le miroir semi-transparent M1, est dirigée sur un système optique OB4, et, derrière cet objectif vers un miroir M2 qui renvoie ce faisceau vers le haut. Le faisceau renvoyé par le miroir M2 repasse à travers le système optique OB4 et est dirigé vers une région où arrive aussi le faisceau réfléchi modulé par le disque. Pratiquement, la région où peuvent se mélanger le faisceau non modulé et le faisceau modulé sera située derrière le miroir semi-transparent M1 : le faisceau modulé est renvoyé par le miroir M1 à 90° vers le haut de la figure et le faisceau non modulé traverse le miroir M1 vers le haut.

Le miroir M1 pourrait être remplacé par un autre type de séparateur divisant le faisceau en deux parties.

Dans cette région on place l'ensemble de photodétecteurs BCCD, pour détecter non pas la concentration d'énergie globale d'un faisceau, mais la répartition spatiale d'énergie dans une zone où interfèrent deux faisceaux de lumière cohérente, l'un modulé, l'autre non modulé. Il faut noter à ce propos que l'on utilise ici le fait que la source de lumière L soit une source de lumière cohérente, alors que dans l'art antérieur, on utilise aussi un laser mais sans faire usage de ses propriétés de cohérence.

Il faut bien comprendre que les trajets de faisceaux indiqués sur la figure 2, résultant de la présence de deux miroirs M1 et M2 et des objectifs OB1, OB2 et OB4 ne sont donnés qu'à titre d'exemple, d'autres configurations de matériel et de faisceaux pouvant être adoptées pourvu qu'on fasse interférer dans une même zone, dans laquelle on placera l'ensemble de photodétecteurs, le faisceau de lumière cohérente non modulé et le faisceau modulé par les informations à lire.

L'ensemble de photodétecteurs BCCD devrait normalement être une matrice bidimensionnelle de photodétecteurs, pour détecter la répartition d'énergie dans deux dimensions. Cependant, si on utilise comme moyen de stockage d'informations un disque tournant, fournissant donc une modulation temporelle d'informations, on utilisera une barrette linéaire de photodétecteurs.

Pour compléter la description de la figure 2, il faut encore signaler qu'il est souhaitable d'incliner, dans la zone d'interférence, la direction générale du faisceau non modulé par rapport à la direction générale du faisceau modulé. Cela s'obtient facilement grâce à des systèmes optiques appropriés; par exemple, un décalage latéral de l'axe optique d'un objectif du système OB4 par rapport à l'axe du faisceau incident arrivant sur cet objectif, permet d'obtenir une inclinaison du faisceau non modulé dans la zone située au dessus du miroir M1.

La raison de cette inclinaison est la nécessité de produire des franges d'interférences marquées détectables par l'ensemble BCCD. Pour une barrette linéaire, l'angle d'inclinaison d'un faisceau par rapport à l'autre est donc situé dans un plan contenant la barrette BCCD; celle-ci est par ailleurs placée globalement transversalement aux faisceaux pour que les franges d'interférences se répartissent sur cette barrette.

On aura donc compris qu'on a réalisé à l'aide des deux faisceaux de lumière cohérente un hologramme de la surface de disque vue par le faisceau laser.

Si le faisceau laser ne se déplaçait pas par rapport à la surface du disque il serait nécessaire, pour que l'hologramme contienne toute l'information relative à l'image de la surface du disque vue par le faisceau, qu'il s'étende dans un plan à deux dimensions (observable par une matrice photosensible), dans lequel les informations sont représentées par des fréquences spatiales dans les deux dimensions. Mais comme le disque tourne, l'une des dimensions de l'information peut être représentée par le temps, et par conséquent l'une des dimensions de l'hologramme peut être représentée par une fréquence temporelle. C'est pourquoi on peut se contenter d'une barrette linéaire de photodiodes, à condition d'analyser dans le domaine des fréquences temporelles les signaux électriques issus de la barrette. La présence de nombreux détecteurs dans la barrette permet l'analyse des franges d'interférences dans le domaine des fréquences spatiales, donnant l'autre dimension de l'information cherchée.

La barrette photosensible est reliée à un circuit de traitement de signaux SP qui fournit à sa sortie des informations représentant les informations stockées dans le disque. Ce circuit de traitement a d'abord pour fonction de rétablir dans le domaine spatio-temporel réel des informations qui sont disponibles sur la barrette sous forme holographique. Il va notamment convertir, par transformation de Fourier, des signaux électriques spatio-temporels en signaux représentant le domaine des fréquences spatiales et temporelles. D'autre part, il peut effectuer des traitements de signaux dans ce domaine fréquentiel, en particulier pour effectuer des corrections de défauts des systèmes optiques.

Le circuit de traitement SP fournit à sa sortie des signaux représentant directement le contenu d'information du disque optique, utilisable de diverses manières selon les applications : restitution de son, d'images vidéo, de données informatiques, etc.

Le traitement effectué par le processeur SP dans le cas d'une barrette linéaire et d'un disque tournant est le suivant : à partir des amplitudes S(x,t) des signaux électriques issus des différents détecteurs, représentant l'énergie lumineuse reçue par un détecteur situé à l'abcisse x dans la barrette, au temps t, on effectue la transformée de Fourier F(u,v) des signaux S(x,t).

u est la variable dans le domaine des fréquences spatiales qui correspond à la variable x dans le domaine de l'espace réel,
v est la variable dans le domaine des fréquences temporelles qui correspond à la variable temporelle réelle t.

Les signaux S(x,t) représentent la répartition d'énergie dans la zone des franges d'interférences produites par la composition entre le faisceau de lumière cohérente modulé et le même faisceau non modulé.

La transformée de Fourier F(u,v) représente, sans perte d'information, ces mêmes franges, mais dans le domaine des fréquences spatiales et temporelles.

Ayant la transformée de Fourier F(u,v) on effectue une translation de coordonnées par rapport à la variable de fréquences spatiales u : les nouvelles coordonnées d'origine sont u' = u + u0, et v' = v.

Cette translation dans le plan des fréquences spatiales revient à décaler le spectre de fréquences sans le modifier. Le décalage est choisi égal à la fréquence du laser de référence. Cela revient tout simplement à éliminer l'influence de la présence du faisceau laser non modulé, et à ne garder dans le spectre que les informations résultant de la modulation du faisceau par les informations optiques à lire.

Un filtrage peut être fait ensuite pour limiter le spectre obtenu aux composantes correspondant à la direction et aux dimensions de la pupille de l'objectif de focalisation du faisceau laser sur le disque.

On peut également effectuer à ce stade un traitement de signal pour corriger des défauts optiques du système. Les défauts les plus faciles à corriger sont ceux qui peuvent être rectifiés par l'utilisation d'une fonction de phase quadratique du type :

$$e^{jk(u'^2+v'^2)} \text{ ou } e^{jk(u'^2+v'^2)^2}$$

j est le nombre imaginaire pur d'amplitude 1
k est un coefficient représentant l'amplitude de la correction désirée.

D'autres corrections peuvent être introduites. L'intérêt de ces corrections est qu'elles sont faites dans le domaine fréquentiel (fréquence spatiale et temporelle) et que les défauts de type optique peuvent parfois être exprimés plus simplement dans le domaine fréquentiel que dans le domaine réel.

Enfin, une transformée de Fourier inverse est effectuée, pour retrouver, à partir de la fonction F(u',v') éventuellement corrigée, une fonction G(z,t) de deux variables réelles, spatiale (z) et temporelle (t). Cette fonction représente la variation dans le temps d'une information optique située à l'abscisse z, mesurée le long d'un segment radial de disque illuminé par le faisceau laser.

La tache de focalisation du faisceau laser peut éclairer simultanément une ou plusieurs pistes adjacentes sur le segment radial; le signal de sortie résultant de la transformée de Fourier inverse sera relatif à ces diverses pistes qui correspondent à des régions d'abscisses z différentes. Une sélection d'une piste déterminée pourra donc être faite à la sortie du circuit de traitement SP : sélection de la fonction G(z,t) pour certaines gammes de valeurs de z. On peut même selon l'invention lire plusieurs pistes simultanément (lecture en stéréo, etc.). Autrement dit, étant donné que le traitement de signal effectué va faire apparaître les différentes pistes côte à côte en fournissant des modulations G(z,t) différentes selon les zones z considérées, il n'est pas nécessaire comme dans l'art antérieur que la tache de focalisation soit aussi petite que la largeur d'une piste.

La conséquence en est que pour une même dimension de tache de focalisation les pistes peuvent être plus petites que dans l'art antérieur et donc plus nombreuses sur une même surface de disque.

D'autre part, alors que l'art antérieur imposait d'avoir une surface de référence entre pistes pour donner une référence de coefficient de réflexion en l'absence de trou dans la piste, on peut maintenant lire des pistes juxtaposées sans surface de référence entre elles. Là encore cela permet d'augmenter la densité de stockage d'information.

Un autre avantage est que l'asservissement mécanique du faisceau peut être moins précis et qu'on peut se contenter d'un asservissement approximatif de la focalisation (asservissement en hauteur) par référence à une surface extérieure du disque), les défauts de focalisation pouvant être corrigés par traitement électronique sur la transformée de Fourier. De même, le positionnement radial peut être effectué simplement par le moteur d'entraînement radial du laser. Il n'est pas nécessaire que le positionnement soit précisément fait par rapport au bord d'une piste comme dans l'art antérieur (où le faisceau devait précisément être placé à cheval entre une piste et l'interpiste adjacente).

La figure 3 représente schématiquement un aspect de l'invention qui est la constitution originale d'un disque optique dans lequel les pistes contenant les informations sont juxtaposées sans intervalle interpiste ou tout au moins avec un intervalle beaucoup plus faible que la largeur des pistes, ce qui n'était pas du tout possible dans la technique antérieure. Les informations sont représentées comme étant des trous de position et de longueur variable dans des pistes de largeur constante; on pourrait cependant aussi envisager d'autres possibilités, par exemple des modifications locales d'indice de réfraction plutôt que des trous gravés.

On peut envisager aussi que le disque comporte des pistes avec une modulation de la profondeur de trous gravés, en plus de la modulation conventionnelle de longueur et espacement des trous.

## Revendications

1. Système de lecture d'informations optiques caractérisé en ce qu'il comporte des moyens pour faire interférer un faisceau laser de référence avec ce même faisceau modulé par des informations optiques à lire, pour créer un motif de franges d'interférences spatiales sur un ensemble de photodétecteurs (BCCD) répartis dans une zone spatiale où ces franges sont présentes, et des moyens pour traiter les informations d'amplitude et de phase spatiale des franges d'interférences, recueillis par l'ensemble de photodétecteurs pour reconstituer les informations optiques qui ont engendré le motif de franges.

2. Système de lecture selon la revendication 1, caractérisé en ce que le faisceau de référence et le faisceau modulé ont des directions générales obliques l'un par rapport à l'autre dans la zone où est située l'ensemble de photodétecteurs.

3. Système selon la revendication 2, caractérisé en ce que l'ensemble de photodétecteurs est une barrette linéaire de photodétecteurs, et en ce que l'angle d'inclinaison entre les deux faisceaux est situé dans le plan de la barrette, celle-ci étant positionnée globalement transversalement aux faisceaux.

4. Système selon l'une des revendications 1 à 3, caractérisé en ce qu'il comporte un laser (L) et un élément séparateur placé devant le laser, cet élément divisant le faisceau en deux parties, l'une des parties étant dirigée vers les informations optiques pour être modulée par celles-ci et être renvoyée ensuite vers l'ensemble de photodétecteurs, des moyens étant prévus pour ramener l'autre partie dans une région où est situé l'ensemble de photodétecteurs.

5. Système selon l'une des revendications 1 à 4, caractérisé en ce que les moyens de traitement comprennent des moyens pour effectuer une transformée de Fourier bidimensionnelle des signaux issus des photodétecteurs, des moyens de traitement de la transformée de Fourier pour éliminer la composante de fréquence spatiale correspondant au faisceau de référence et ne garder que celles du faisceau modulé, des moyens pour effectuer une transformée de Fourier inverse, pour fournir des signaux électriques représentant dans le domaine réel les informations optiques qui ont modulé le faisceau laser.

6. Système de lecture selon la revendication 5, caractérisé en ce qu'il est prévu en outre des moyens pour effectuer un traitement de signal sur la transformée de Fourier après élimination de la composante de fréquence correspondant au faisceau de référence, pour corriger des défauts optiques du système.

7. Système de lecture selon la revendication 6, caractérisé en ce que les moyens de traitement de correction comportent un moyen pour multiplier la transformée de Fourier par une fonction de phase du type :

$$e^{jk(u^2+v^2)} \qquad \text{ou} \qquad e^{jk(u^2+v^2)^2}$$

avec k coefficient numérique fonction de l'importance de la correction à effectuer, j est le nombre imaginaire racine carrée de -1, et u et v sont les variables de la transformée de Fourier à corriger.

8. Système de lecture selon l'une des revendications précédentes, caractérisé en ce qu'il comprend en outre un disque optique pour le stockage optique des informations, destiné à être lu par le système, le disque comportant des pistes adjacentes concentriques avec un espace interpiste entre les pistes de largeur nulle ou très inférieure à la largeur d'une piste.

9. Système de lecture selon la revendication 8, caractérisé en ce que les pistes portent une modulation de profondeur des points en sus de la modulation conventionnelle de longueur et d'espacement des points.

**Patentansprüche**

1. System zum Lesen von optischen Informationen, dadurch gekennzeichnet, daß es Mittel enthält, um ein Referenz-Laserbündel mit dem gleichen, durch zu lesende optische Informationen modulierten Bündel zur Interferenz zu bringen, um ein Muster von räumlichen Interferenzstreifen auf einer Gruppe von Photodetektoren (BCCD) zu erzeugen, die in einer räumlichen Zone verteilt sind, in der diese Streifen vorhanden sind, sowie Mittel zur Verarbeitung der Amplituden- und räumlichen Phasen-Informationen der Interferenzstreifen, die von der Gruppe der Photodetektoren erfaßt werden, um die optischen Informationen, die das Streifenmuster erzeugt haben, wiederherzustellen.

2. Lesesystem nach Anspruch 1, dadurch gekennzeichnet, daß das Referenzbündel und das modulierte Bündel allgemeine Richtungen haben, die in der Zone, in der die Photodetektorengruppe angeordnet ist, schräg zueinander sind.

3. System nach Anspruch 2, dadurch gekennzeichnet, daß die Photodetektorengruppe eine lineare Photodetektorenzeile ist und daß der Neigungswinkel zwischen den beiden Bündeln in der Ebene der Zeile liegt, die global quer zu den Bündeln angeordnet ist.

4. System nach einem der Ansprüche 1 bis 3, dadurch gekennzeichnet, daß es einen Laser (L) und ein vor dem Laser angebrachtes Strahlenteilerelement enthält, wobei dieses Element das Bündel in zwei Teile teilt, wobei einer der Teile zu den optischen Informationen gerichtet ist, damit er von diesen moduliert und zu der Photodetektorengruppe zurückgeschickt wird, wobei Mittel vorgesehen sind, um den anderen Teil in einen Bereich zu bringen, in dem sich die Photodetektorengruppe befindet.

5. System nach einem der Ansprüche 1 bis 4, dadurch gekennzeichnet, daß die Verarbeitungsmittel Mittel enthalten, um eine zweidimensionale Fouriertransformierte der von den Photodetektoren abgegebenen Signale zu bilden, sowie Mittel zur Verarbeitung der Fouriertransformierten, um die dem Bezugsbündel entsprechende räumliche Frequenzkomponente zu beseitigen und nur diejenigen des modulierten Bündels beizubehalten, sowie Mittel zur Bildung einer inversen Fouriertransformierten, um elektrische Signale zu liefern, die in dem reellen Bereich die optischen Informationen darstellen, die das Laserbündel moduliert haben.

6. Lesesystem nach Anspruch 5, dadurch gekennzeichnet, daß außerdem Mittel vorgesehen sind, um eine Signalverarbeitung an der Fouriertransformierten nach Beseitigung der dem Bezugsbündel entsprechenden Frequenzkomponente durchzuführen, um optische Fehler des Systems zu korrigieren.

7. Lesesystem nach Anspruch 6, dadurch gekennzeichnet, daß die Korrekturverarbeitungsmittel ein Mittel enthalten, um die Fouriertransformierte mit einer Phasenfunktion des Typs

$$e^{jk(u^2+v^2)} \qquad \text{oder} \qquad e^{jk(u^2+v^2)^2}$$

zu multiplizieren, wobei k ein numerische Koeffizient ist, der von dem Ausmaß der durchzuführenden Korrektur abhängt, j die imaginäre Zahl der Quadratwurzel aus -1 ist, und u und v die Variablen der zu korrigierenden Fouriertransformierten sind.

8. Lesesystem nach einem der vorhergehenden Ansprüche, dadurch gekennzeichnet, daß es außerdem eine optische Scheibe zur optischen Speicherung der Informationen enthält, die durch das System gelesen werden soll, wobei die Scheibe nebeneinanderliegende konzentrische Spuren mit einem Spurzwischenraum zwischen den Spuren aufweist, dessen Breite null oder sehr klein gegen die Breite einer Spur ist.

9. Lesesystem nach Anspruch 8, dadurch gekennzeichnet, daß die Spuren außer der üblichen Modulation der Länge und des Abstands der Punkte eine Tiefenmodulation der Punkte tragen.

## Claims

1. System for reading optical information elements, characterized in that it includes means for making a reference laser beam interfere with this same beam modulated by optical information elements to be read, in order to create a pattern of spatial interference fringes on a set of photodetectors (BCCD) distributed in a spatial region where these fringes are present, and means for processing the information elements regarding the spatial phase and amplitude of the interference fringes, received by the set of photodetectors in order to reconstruct the optical information elements which have generated the fringe pattern.

2. Read system according to Claim 1, characterized in that the reference beam and the modulated beam have general directions which are oblique with respect to each other in the region where the set of photodetectors lies.

3. System according to Claim 2, characterized in that the set of photodetectors is a linear array of photodetectors and in that the angle of inclination between the two beams lies in the plane of the array, the latter being positioned so as to be overall transverse to the beams.

4. System according to one of Claims 1 to 3, characterized in that it includes a laser (L) and a splitter component placed in front of the laser, this component splitting the beam into two parts, one of the parts being directed towards the optical information elements in order to be modulated by the latter and then to be sent on to the set of photodetectors, means being provided for bringing the other part back into a region where the set of photodetectors lies.

5. System according to one of Claims 1 to 4, characterized in that the processing means comprise means for producing a two-dimensional Fourier transform of the signals coming from the photodetectors, means for processing the Fourier transform, in order to remove the spatial frequency component corresponding to the reference beam and to keep only those of the modulated beam, and means for producing an inverse Fourier transform, in order to produce electrical signals representing, in the real domain, the optical information elements which modulated the laser beam.

6. Read system according to Claim 5, characterized in that means are furthermore provided for carrying out signal processing on the Fourier transform after removing the frequency component corresponding to the reference beam, in order to correct optical defects in the system.

7. Read system according to Claim 6, characterized in that the correction processing means include a means for multiplying the Fourier transform by a phase function of the type:

$$e^{jk(u^2+v^2)} \qquad or \qquad e^{jk(u^2+v^2)^2}$$

where k is a numerical coefficient that depends on the magnitude of the correction to be made, j is the imaginary number, i.e. the square root of -1, and u and v are the variables of the Fourier transform to be corrected.

8. Read system according to one of the preceding claims, characterized in that it furthermore comprises an optical disk for optical storage of the information elements, which is intended to be read by the system, the disk including concentric adjacent tracks with, between the tracks, an intertrack space having a width which is zero or is very much less than the width of a track.

9. Read system according to Claim 8, characterized in that the tracks carry a modulation in depth of the points in addition to the conventional modulation in length and spacing of the points.

FIG.1

FIG.3

FIG. 2